# EUROPEAN PATENT APPLICATION

(11) **EP 4 769 148 A1**
(43) Date of publication of application: **01.07.2026**
(21) Application number: 24223707.1
(22) Date of filing: 30.12.2024
(51) Int. Cl.: G06F 9/54, G05B 13/04

(54) **METHOD OF OPERATING AN INTERACTIVE LOCAL-REMOTE COMPUTER SYSTEM, EDGE DEVICE AND COMPUTER SYSTEM COMPRISING THE SAME**

(71) Applicant: Ramblr GmbH, 82049 Pullach im Isartal (DE)
(72) Inventor: Dr. Guggiana Nilo, Drago Andrés, Munich (DE); Dr. Schubert, Philipp, Puchheim (DE); Hasenbeck, Roman, San Francisco (US); Krebs, Jennifer, Gilching (DE)
(74) Representative: Schmitt-Nilson Schraud Waibel Wohlfrom Patentanwälte Partnerschaft mbB

(57) **Abstract**

A method of operating an interactive local-remote computer system, comprises receiving, by a local module (20) running on an edge device (2) of the computer system, first sensor data from at least one sensor (23, 202) which captures data of at least one of a local real environment (22) and the edge device (2) in relation to the local real environment (22), and transforming the first sensor data into at least one first scene state (44_{T1}) which is indicative of at least a part of the local real environment (22) or the edge device in relation to the local real environment at a first point of time (T1), transferring, by the local module (20), the at least one first scene state (44_{T1}) to a remote module (60) running on a server computer (6) or computer network of the computer system, and maintaining the at least one first scene state in a scene state memory (61) associated with the remote module, generating, by the remote module (60), at least one conditional reaction for a least one local actuator device (31, 32, 201, 203) associated with the local real environment (22) based on at least one event prediction processed from the at least one first scene state (44_{T1}), and transferring, by the remote module (60), the at least one conditional reaction to the local module (20) and maintaining the at least one conditional reaction in a local trigger database (28) associated with the local module. The local module (20) receives at least one second scene state (44_{T2}) which is indicative of at least a part of the local real environment (22) or the edge device in relation to the local real environment at a second point of time (T2), matches and associates the second scene state (44_{T2}) with at least one of a plurality of conditional reactions maintained in the local trigger database (28), and if a trigger condition is met, triggers generation of at least one driving signal for the at least one local actuator device (31, 32, 201, 203) based on the associated at least one conditional reaction for driving a physical execution action (301) on the at least one local actuator device. The computer system is capable of reducing latency within local-remote interactive systems.

## Description

The present disclosure relates to a method of operating an interactive local-remote computer system, an edge device configured to communicate with a remote server computer or computer network, and an interactive local-remote computer system comprising such edge device.

Interactive local-remote computer systems are known in the art, for example for assisting users in human activities, such as navigation or augmented reality applications. More frequently, such systems employ artificial intelligence (Al) systems or methods, also known as machine learning (ML) systems, machine learning methods or machine learning models. Al systems, such as LLM-based assistance systems (LLM: Large Language Model), deployed on an edge device often face a significant trade-off: computing on edge offers high speed and independence with limited hardware resources (less powerful processors, less memory, and limited storage), whereas computing on cloud provides greater computing power but comes with larger delay (remote latency) and total dependence on the cloud service (connectivity, performance variability, etc.).

In the current art, there are two ways to improve response quality of LLM-based assistance systems, or agents. A first way focuses on the local component, and it is based on the use of a smaller LLM that can be deployed on edge to provide reasoning power. Despite faster inference, they lack in performance when compared to their full-fledged counterparts. There is active research on improving their quality and to make their responses more personalized.

For example, Kunpeng Song et al., "MoMA: Multimodal LLM Adapter for Fast Personalized Image Generation", ByteDance, Rutgers University, https://arxiv.org/pdf/2404.05674, 8 April 2024, present MoMA, an open-vocabulary, training-free, personalized image model that specializes in subject-driven personalized image generation.

Jihwan Bang et al., "Crayon: Customized On-Device LLM via Instant Adapter Blending and Edge-Server Hybrid Inference", Proceedings of the 62nd Annual Meeting of the Association for Computational Linguistics (Volume 1: Long Papers), pages 3720-373, August 11-16, 2024, Association for Computational Linguistics, propose Crayon, a novel approach for on-device LLM customization.

A second way, focused on the remote component, involves an increase of the effective throughput of LLMs, e.g. via quantization to reduce memory footprint, cf. Renren Jin et al., "A Comprehensive Evaluation of Quantization Strategies for Large Language Models", https://arxiv.org/abs/2402.16775v1, 26 Feb 2024, or faster inference by speculative execution (cf. Charlie Chen et al, "Accelerating Large Language Model Decoding with Speculative Sampling", https://arxiv.org/abs/2302.01318, 2 Feb 2023.

Both optimization paths enable a better prediction quality on the local edge device, but they still require executing the LLM.

Prediction to reduce latency is a known technique for remote-local systems, but the signals predicted are usually very simple trends. Examples are prediction of wireless latency across devices to pre-emptively reduce latency of the system while maintaining low power consumption, as described in, for example, US 11 558 276 B2.

See also Zhihan Liu et al., "Reason for Future, Act for Now: A Principled Framework for Autonomous LLM Agents with Provable Sample Efficiency", 29 Sep 2023, https://arxiv.org/abs/2309.17382.

There are also action prediction models, but their usage is in very constrained domains that are not production-oriented, have limited vocabulary/flexibility and are not used as part of a system utilizing these predictions to set reaction triggers. (cf. for example, Yi Wang et al., "InternVideo2: Scaling Foundation Models for Multimodal Video Understanding", Computer Vision - ECCV 2024, Conference paper, First Online: 27 November 2024, pp 396-416).

Further, there are "answer cache" mechanisms that have precached answers to reduce the latency of an LLM, but no actions are predicted or triggers set (see US 11 593 364 B2).

A complementary perspective is that of so-called affordances, which were described by J. J. Gibson in The Ecological Approach to Visual Perception, 1979: "The affordances of the environment are what it offers the animal, what it provides or furnishes, either for good or ill.... It implies the complementarity of the animal and the environment." Understanding affordances hence requires context (environment, user preferences, ...) and enables reasoned acting on the environment in, e.g., robotics and action understanding.

For example, see Tim Engelbracht et al., "SpotLight: Robotic Scene Understanding through Interaction and Affordance Detection", https://arxiv.org/odf/2409.11870, 18 Sept. 2024, or Tushar Nagarajan et al., "EGO-TOPO: Environment Affordances from Egocentric Video", https://openaccess.thecvf.com/content_CVPR_2020/papers/Nagarajan_Ego-Topo_Environment Affordances_From_Egocentric_Video_CVPR_2020_paper.pdf.

It would be beneficial to provide a method of operating an interactive local-remote computer system capable of reducing latency within local-remote interactive systems.

The present disclosure is directed to a method of operating an interactive local-remote computer system according to the appended claims. The present disclosure further provides an edge device configured to communicate with a remote server computer or computer network, and an interactive local-remote computer system comprising such edge device.

According to an aspect, the present disclosure provides a method of operating an interactive local-remote computer system, comprising
receiving, by a local module running on an edge device of the computer system, first sensor data from at least one sensor which captures data of at least one of a local real environment and the edge device in relation to the local real environment, and transforming the first sensor data into at least one first scene state which is indicative of at least a part of the local real environment or the edge device in relation to the local real environment at a first point of time,
transferring, by the local module, the at least one first scene state to a remote module running on a server computer or computer network of the computer system which is remote from the edge device, and maintaining the at least one first scene state in a scene state memory associated with the remote module,
generating, by the remote module, at least one conditional reaction for a least one local actuator device associated with the local real environment based on at least one event prediction processed from the at least one first scene state,
transferring, by the remote module, the at least one conditional reaction to the local module and maintaining the at least one conditional reaction in a local trigger database associated with the local module,
receiving, by the local module, at least one second scene state which is indicative of at least a part of the local real environment or the edge device in relation to the local real environment at a second point of time (which is subsequent to or later than the first point of time),
matching and associating, by the local module, the second scene state with at least one of a plurality of conditional reactions maintained in the local trigger database, and
triggering, if a trigger condition is met, by the local module, generation of at least one driving signal for the at least one local actuator device based on the associated at least one conditional reaction for driving a physical execution action on the at least one local actuator device.

The present disclosure proposes a mechanism capable of reducing the reaction latency of local-remote interactive computer systems. Such systems are then able to react to the queries from the user or the environment and execute a proper response with low latency. One aspect is that, on the one hand, local computing can be very fast with direct access to sensor data in the local or edge device, but it lacks computational power. On the other hand, remote computing (such as with one or more server computers or a computer network) has significant computational power, but it receives data from local edge devices, and then also sends commands in return. In prior art systems, as described above, such loop can make the overall reaction time of the system very slow and dependent on external factors (e.g., internet connection, latency of the remote compute system, etc.), the drawbacks of which may be overcome according to aspects of the present disclosure.

With a method of operating an interactive local-remote computer system as described herein, there is provided a local-remote latency reduction mechanism which offers a solution for reducing the latency between local-remote interactive systems, combining the high-speed and independence of edge computing with the greater computing power of a server computer or computer network (e.g. of a cloud-based system), while minimizing the impact of hardware limitations, remote latency, and network (e.g. cloud) dependence. The output of the method, i.e. triggering a physical execution action on at least one local actuator device, may thus be performed at a greatly reduced latency as compared to existing target local-remote systems. Particularly, aspects of the present disclosure propose a mechanism that generates action sequences for the local actuator device available on, or coupled with, the edge device as local component. Triggering and driving a physical execution action may be or include, for example, visualization on a display and/or spoken reminder via speakers. The triggering of such physical execution action is conditional on a trigger condition that is tailored to the local real environment and context the user is operating in.

According to aspects of the present disclosure, the system's latency may be significantly reduced by relying on, e.g., short- and mid-term prediction of potential events and the subsequent preparation of reactions conditional to those events. As a basic element of the mechanism, the reaction condition is pre-established by the remote module, but in such a way that the triggering event can be detected locally on the edge device rather than remotely, thereby circumventing the signal communication loop from the edge device to the server computer or computer network (e.g. cloud) and back.

According to an embodiment, the remote module runs at least one process which implements at least one machine learning model, particularly at least one LLM. Advantageously, with the remote module running on a server computer or computer network of the computer system, high computational power components in the form of, e.g., LLMs can be leveraged to process local sensor data and/or user queries and trigger physical execution actions on the one or more local actuator devices based on conditional reactions computed on the server computer or computer network, e.g. cloud computer, tailored to the respective situation or query at high speed.

According to an embodiment, the method comprises processing, in an event prediction module of the remote module, context data from one or more scene states maintained in the scene state memory including the at least one scene state and performing an event prediction process from the context data for generating the at least one event prediction. For example, context data may be derived from the first sensor data and, according to an embodiment, also other sensor data such as sensor data at an earlier point of time, or sensor data from another type of sensor, to derive context information which indicates that the user is approaching a particular location in the real environment, such as a product aisle in a supermarket.

According to an embodiment, the method also comprises processing, in a conditional reaction engine of the remote module, the at least one event prediction and generating the at least one conditional reaction based on the at least one event prediction. For example, the conditional reaction engine dynamically generates semantical reaction strategies based on predicted events. For example, an LLM receives an event prediction: "the user might forget a product when walking by the aisle, what should we do to be helpful?", which will generate a reaction such as "remind the user not to forget the product if they miss it".

According to an embodiment, at least one of the event prediction module and conditional reaction engine implements at least one machine learning model for affordance prediction. According to an embodiment, at least one of the event prediction module and conditional reaction engine implements an object affordance prediction model and/or a scene affordance prediction model. Thus, advantageously, the invention aims to exploit the concept of affordances, for example to generate trigger-action pairs that are derived from context- and user-relevant events (trigger) and associated with the action of an agent.

According to an embodiment, in the local module, for matching and associating the second scene state with at least one of the plurality of conditional reactions maintained in the local trigger database, the local module runs at least one process which implements at least one machine learning model, such as an LLM.

According to an embodiment, the local module employs a model stack for processing and transforming the first sensor data into the at least one first scene state. The model stack includes at least two machine learning models trained for a respective task. According to an embodiment, each of the machine learning models may be trained for object detection, object tracking and/or activity recognition, wherein each of the models may be trained for a different task or the same task. Advantageously, an array of models may be employed, such as small models trained for specific tasks, such as activity recognition, object detection and object tracking. A stack is advantageous since collections of small models have been shown to provide a good compromise between high task performance and computational costs.

According to an embodiment, the method further comprises processing, in the above described event prediction module of the remote module, context data from an optional context database associated with the remote module, wherein the context database maintains historical and global data associated with respective scene states of a plurality of points of time. Advantageously, with such additional historical and global data, the context information may be enhanced which may improve the outcome of the event prediction, since more detailed context can be taken into account which increases precision of the event prediction.

According to an embodiment, the remote module includes a conditional reaction parsing module which converts the generated at least one conditional reaction into an actionable instruction for the at least one local actuator device. Since the remote module is advantageously implemented in an optimized and scalable compute environment, the conditional reaction parsing module runs at least one process which uses at least one machine learning model, such as at least one LLM, which may enhance the outcome of the conditional reaction parsing.

According to an embodiment, the local module includes a scene state differentiating module which compares the at least one first and second scene states maintained in a local scene state memory associated with the local module, and identifies at least one change in scene states compared, wherein in case of an identified at least one change, the scene state differentiating module initiates transfer of a respective one of the first and second scene state to the remote module. With such scene state differentiating procedure, scene state data transfer to the remote module may be concentrated on those scene states which contain new scene information to save transfer capabilities and bandwidth, and decrease the overall transfer time between local module and remote module.

According to an embodiment, the local module receives at least one user query via the at least one sensor (e.g. sensor stack), which is incorporated into the scene state derived from the sensor data. That is, the remote module receives at least one user query from the edge device through at least one of the first and second scene states, The generation of the at least one conditional reaction for the at least one local actuator device by the remote module is therefore further based on the at least one user query.

According to a further aspect, the present disclosure provides an edge device configured to communicate with a remote server computer or computer network, comprising at least one processor and memory that stores executable instructions that, when executed by the at least one processor, run a local module which is configured to:
receive first sensor data from at least one sensor capturing data of at least one of a local real environment and the edge device in relation to the local real environment, and transform the first sensor data into at least one first scene state which is indicative of at least a part of the local real environment or the edge device in relation to the local real environment at a first point of time,
transmit the at least one first scene state to a server computer or computer network remote from the edge device,
receive from the server computer or computer network at least one conditional reaction in response to transmitting the at least one first scene state, the at least one conditional reaction comprising an instruction for a least one local actuator device associated with the local real environment, and maintain the at least one conditional reaction in a local trigger database,
receive at least one second scene state which is indicative of at least a part of the local real environment or the edge device in relation to the local real environment at a second point of time,
match and associate the at least one second scene state with at least one of a plurality of conditional reactions maintained in the local trigger database, and
if a trigger condition is met, trigger generation of at least one driving signal based on the associated at least one conditional reaction to the at least one local actuator device for driving a physical execution action on the at least one local actuator device.

Any embodiments and advantages described with respect to the method may equally or analogously be employed to the edge device as disclosed herein.

According to an embodiment, the local module is configured to receive sensor data from at least one of the following sensors or sensor arrangements: a camera (such as a RGB camera, event-based camera, or infrared camera), a microphone, an inertial sensor, a position sensor, a tracking sensor, a rotation sensor, a velocity sensor, an acceleration sensor, a magnetic sensor, a temperature sensor, an environmental pressure sensor, a light sensor (such as infrared or LiDAR sensor), a touch sensor, a depth sensor, a geolocation sensor, a time sensor, or any combination thereof.

According to an embodiment, the local module is configured to output the at least one driving signal to at least one local actuator device, which is or comprises at least one of the following devices or device arrangements: a wearable device, a display device, a mobile communications device, a loudspeaker, a smart glasses, a machine for assisting human activity (such as a washing machine or dishwasher), an industrial machine (which can be found in any type of industry), a robotic machine (including "complete" robots or parts thereof, such as one or more robotic arms), a laboratory machine, a vehicle (such as a smart car), or any combination thereof.

According to an embodiment, an edge device according to the aspects of the invention as described herein may be or comprise a device, such as one or more, or any combination, of the following: a mobile device or machine, a wearable device, a mobile phone, a tablet computer, a data glasses, a mobile or stationary computer, such as a laptop, PC, server, or workstation, a vehicle (such as a smart car).

According to a further aspect, the present disclosure also provides an interactive local-remote computer system comprising an edge device as described herein according to aspects of the invention, a server computer or computer network remote from the edge device. The server computer or computer network comprises at least one processor configured to run a remote module which receives, from the local module of the edge device, the at least one first scene state and maintains the at least one first scene state in a scene state memory associated with the remote module. The remote module then generates at least one conditional reaction for the at least one local actuator device based on at least one event prediction processed from the received at least one first scene state, and transmits the at least one conditional reaction to the local module.

Any embodiments and advantages described with respect to the method may equally or analogously be employed to the interactive local-remote computer system as disclosed herein.

According to an embodiment, the edge device and the server computer or computer network are communicating with each other through a communications network which may be, according to an embodiment, the Internet. For example, the server computer or computer network may form, or may be part of, a proprietary network, such as a corporate network, and/or open network, such as the Internet.

In a potential implementation, any one of the edge device, server computer(s) and/or the computer network, and/or the data sources (like one or more sensors or sensor arrangements), or parts of these components, may be implemented in software and/or hardware, in discrete or distributed manner, in any appropriate processing device, such as in one or more microprocessors or CPUs or GPUs, e.g., of a mobile computer system or computer system on premise, accessible through local network and/or the internet. Unless stated otherwise, a component such as a processor or a memory or storage device described as being configured to perform a task may be implemented as a general component that is temporarily configured to perform the task at a given time, or a specific component that is manufactured to perform the task. As used herein, the terms edge device, processor, processing device, computer, server computer, computing device, or computer network respectively refer to one or more devices, circuits, microprocessors, servers and/or processing cores, or devices comprising such components, configured to process data, such as computer program instructions.

Aspects of the invention will now be further described in connection with the following Figures, which illustrate exemplary embodiments, in which
- Fig. 1: shows an overall exemplary configuration of an interactive local-remote computer system along with a scenario of an exemplary use case according to embodiments of the present invention,
- Fig. 2: shows a flow diagram of a method and components implemented in an interactive local-remote computer system in connection with a local module of an edge device and a remote module of a server computer, respectively, according to embodiments of the invention,
- Fig. 3A, 3B: show respective flow diagrams of a method and components implemented in an interactive local-remote computer system in connection with the local and remote modules, respectively, at a first point of time T1 according to embodiments of the invention in an exemplary use case scenario,
- Fig. 4: shows a flow diagram of a method and components implemented in connection with the remote module of a server computer in the exemplary use case scenario of Fig. 3 according to embodiments of the invention,
- Fig. 5: shows a flow diagram of a method and components implemented in connection with the local module of an edge device in the exemplary use case scenario of Fig. 3 at a second point of time T2 according to embodiments of the invention.

Aspects of the invention will now be described in more detail with reference to the Figures. It should be noted that the invention is not limited to the disclosed embodiments, which are provided mainly for describing certain aspects of the invention in an exemplary manner. A detailed description of one or more embodiments of the invention is provided below along with accompanying Figures that illustrate the invention. The invention is described in connection with such embodiments, but the invention is not limited to any embodiment. For the purpose of clarity, technical material or terms that are known to the skilled person in the art will not be described in detail so that the invention is not unnecessarily obscured.

Machine Learning (ML) as used herein is understood as a term which is commonly known in the art. The technique involved with ML is sometimes also designated as Deep Learning (DL), Artificial Intelligence (Al), etc. ML is used as a term which describes all the different forms of algorithms which are based on machine learning or deep learning and use machine learning models. This could be Image Classification, Object Detection, tracking, or other ways of interpreting sensor, task and/or process data. For example, deep learning analysis is performed using a machine learning model such as an artificial neural network.

A machine learning model, such as an LLM, is understood as being a model ready to be used by an Al or ML algorithm and is, for example, an artificial neural network.

Context or context information is used herein as a collection of information which is indicative of the situation, use case, environment and/or intention associated with the process and/or the computer system, such as the edge device.

Generally, as known in the art, an edge device as used herein is a device which is positioned or functions at an edge of a computer network, e.g. as an entry point into the computer network, such as the Internet. As such, any device which has capability to function as an access or entry device to services of a server computer or computer network can be used as an edge device according to the aspects of the invention as described herein.

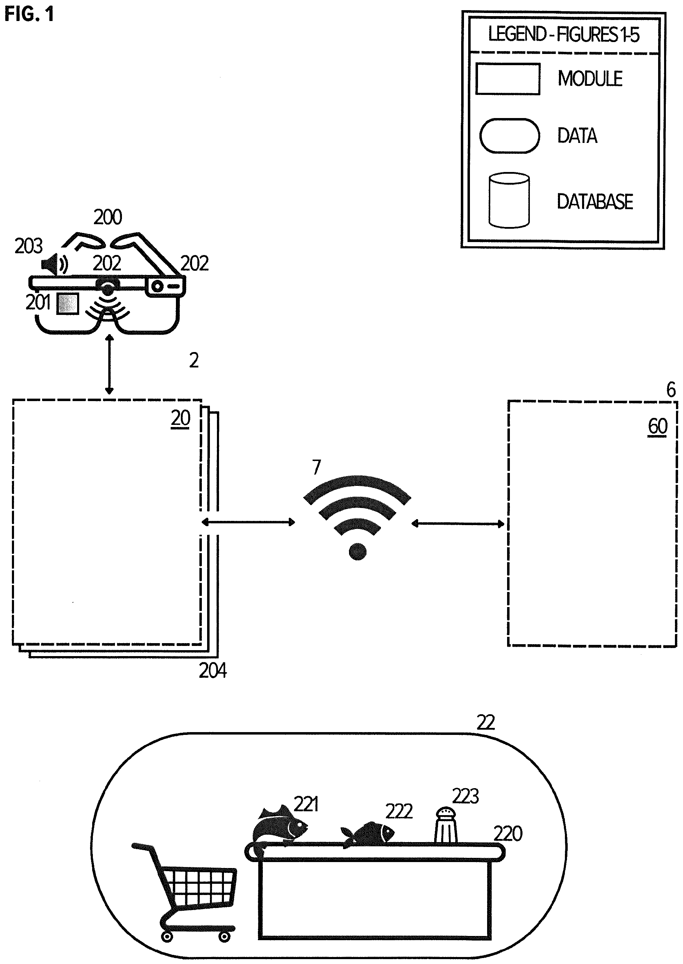

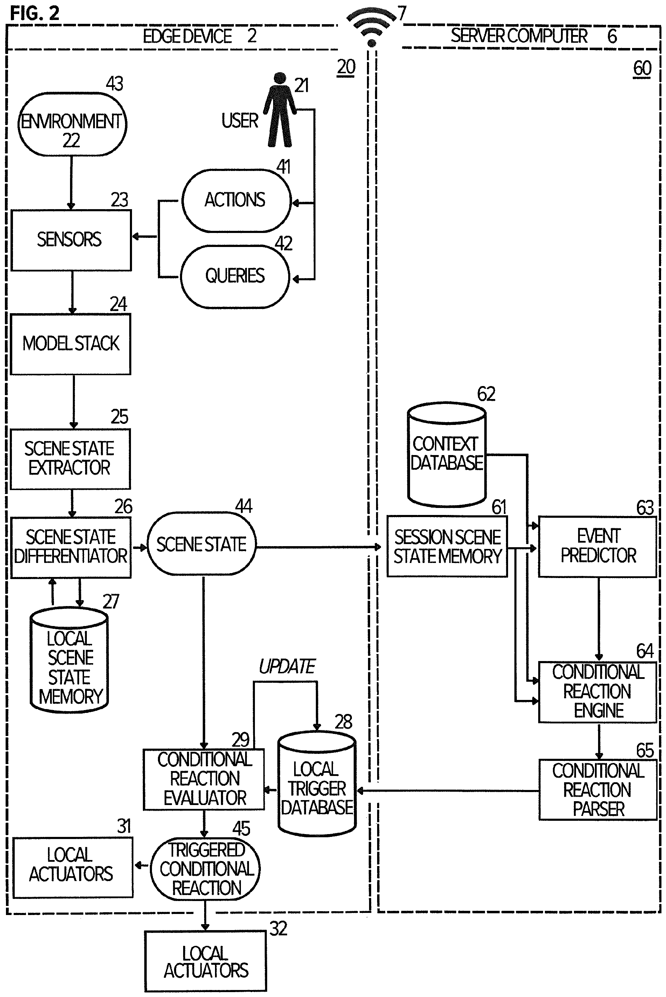

Fig. 1 in connection with Fig. 2 shows an overall exemplary configuration of an interactive local-remote computer system along with a scenario of an exemplary use case according to embodiments of the present invention. An interactive local-remote computer system comprises an edge device 2 and a server computer 6 (or computer network) which are coupled through a network 7 of computers, such as a corporate intranet or the publicly accessible Internet. Generally, as set out in detail above, each of the edge device 2 and server computer 6 or computer network can be implemented in various ways. In the present embodiment, the edge device 2 comprises a data glasses 200 as may be commonly used in an Augmented Reality (AR) application. The data glasses comprise one or more displays 201, such as semi-transparent display screens, an image sensor 202 such as a camera, and a loudspeaker 203. By means of the displays 201 and loudspeaker 203, the user may gather information in the form of images, text, or the like, blended in on the displays 201 and audio information through the loudspeaker 203. In other embodiments, the data glasses may also be equipped with further sensors, such as an IMU or rotation sensor.

Generally, one or more sensors 23 (cf. Fig. 2) which capture data of at least one of a local real environment 22 and the edge device 2 in relation to the local real environment 22, such as the camera 202 of the data glasses 200, may be integrated in, or part of, the edge device 2, and/or may be or contained in one or more separate components which are communicatively coupled with the edge device 2, e.g. wirelessly.

The data captured by the one or more sensors 23 are indicative of one or more physical properties of the local real environment 22 and/or the edge device 2, such as real objects of the real environment, light, temperature, color, chemical consistency, or pressure of a medium or objects within the real environment, movement, rotation or position of the edge device 2 in relation to the real environment, to name a few.

For processing digital information, the edge device 2 comprises one or more data processing units 204, which may be integrated with the data glasses 200 or may be (at least in part) separate, e.g. coupled wirelessly with the data glasses 200. In one embodiment, the one or more data processing units 204 may be part of a mobile phone (not shown) or may be a part of both, i.e. may be distributed among the data glasses 200 and the mobile phone, with the mobile phone coupled with the data glasses 200 via, e.g., the Bluetooth ^{®} standard. In such embodiment, the edge device 2 may access further sensor data provided by the mobile phone, such as a geolocation sensor (e.g. GPS or similar) or compass (not shown). The one or more data processing units 204 each comprise one or more microprocessors and memory(not explicitly shown), as commonly known in the art. Similarly, the server computer 6 or computer network comprises one or more microprocessors and associated memory (not explicitly shown), as commonly known in the art.

The edge device 2 is particularly placed, or may be used, within a local real environment 22. The local real environment 22 may be, in principle, any real environment in which the user is performing actions, such a closed space (e.g. room in building) or open space of a real environment surrounding the user who uses the edge device 2. For example, the local real environment 22 may be a space within a supermarket, industrial factory, a laboratory, or natural environment where a vehicle is moving, to name a few.

The edge device 2, more particularly the one or more data processing units 204, runs a local module 20 which may be implemented in software and/or hardware, in discrete or distributed manner, in any appropriate processing device (processor), such as in one or more microprocessors in data processing unit(s) 204. The server computer 6 or computer network runs a remote module 60 which also may be implemented in software and/or hardware, in discrete or distributed manner, in any appropriate processing device, such as in one or more microprocessors. To this end, the at least one memory in data processing unit(s) 204 stores executable instructions that, when executed by the at least one microprocessor, run the local module 20.

The present invention may be applied in a plurality of use cases or embodiments. The following described embodiments employing a data glasses 200 which is worn by the user during movement in a local real environment, such as a supermarket or grocery store, shall not limit the applicability of the invention. For example, the local module 20 can be embodied in conventional hardware, e.g., Meta RayBan ^{®} smart glasses or an electric vehicle. For better readability, an example is described using smart glasses 200 in a grocery store context below.

Fig. 2 shows a flow diagram of a method of operating an interactive local-remote computer system, as shown in Fig. 1, and components implemented therein. The left part of Fig. 2 shows such flow diagram and components involved in connection with the local module 20 of the edge device 2, and the right part of Fig. 2 in connection with remote module 60, according to embodiments of the invention.

In the local module 20, there is for example an environmental context component, whereby low-level, fast acting models (object detectors and point trackers based on small neural networks or other machine learning models) and sensors (cameras, microphones, etc.) capture raw data (e.g., images, video, or other sensory inputs, particularly indicative of one or more physical parameters) from the local real environment 22 (here: a supermarket or grocery store). An actor 21 in the environment 22 (such as a human or robot) interacts with the environment 22 through its actions 41 (e.g., looking at a grocery list and putting fresh salmon 221 into a shopping cart) and may send queries 42 to the remote module 60 (i.e., here: the server computer 6 through the internet 7) for further processing (e.g. asks the system: "what recipe can I make with this tonight?").

Generally, the local module 20 receives sensor data from one or more sensors 23 associated with the edge device 2, such as the camera 202 of the data glasses 200 which captures data 43 of the local real environment 22 and/or of the edge device 2 in relation to the local real environment 22. The data may be, for example, images of the local real environment, or an image stream (e.g. video).

The sensor data provided by the one or more sensors 23 is fed into a data processing pipeline in the local module 20. First a model stack 24 processes the sensor data, or parts thereof, to extract relevant information. The model stack 24 advantageously comprises an array of small models trained for specific tasks, such as activity recognition, object detection and object tracking. A stack is used since collections of small models have been shown to provide best compromise between high task performance and computational costs. The outputs of this stack flow into a scene state extractor 25, which transforms processed data into a summarized "scene state" that does not depend on the raw images or video, but that preserves all relevant information in the scene.

In the following, scene data shall designate sensor data associated with the local real environment and/or with the edge device in relation to the local real environment captured by the one or more sensors at a particular point of time (so-called "scene"). For example, if the sensor is a camera, such as the camera 202 of the data glasses 200, scene data are one or more images or image data derived from images of the local real environment 22 captured by the camera at a particular point of time. Generally, scene data are not limited to image data, but can also be sensor data of other sensors 23, such as position sensors or microphones, measuring a physical parameter or property associated with the local real environment 22 at a particular point of time. In this regard, scene data may be one or more sets of position data and/or audio data, respectively, of the local real environment 22 captured by the respective sensor at a particular point of time. Scene data may also encompass sensor data of various sensors of same or different kind, such as a combination of image, position and audio data.

Accordingly, a "scene state" shall designate a data set, such as a scene graph commonly known in the art, indicative of captured sensor data of the local real environment or the edge device in relation to the local real environment at a particular point of time (i.e. of a "scene"). After extraction, a "scene state" does not depend on the raw sensor data anymore, such as raw images or video, but preserves relevant information in the scene.

Continuing with the flow diagram shown in Fig. 2, this entails, for example, a list of objects present in the scene plus their attributes and relations between the objects. Such a representation constitutes what is known as a scene graph, and it typically summarizes relevant aspects of a given scene in a structured fashion or format. Thereafter, a scene state differentiator 26 compares current and prior scene states to identify changes or updates (e.g., raw salmon in cart" vs "raw salmon in counter"). To this end, the differentiator 26 may interact with a local scene state memory 27, which stores local snapshots of scene states (e.g., scene graphs) for immediate reference (e.g., shopping cart empty at time X).

If the scene state differentiator 26 has identified changes or updates in a respective scene state as compared to a previous one captured at an earlier point of time, the local module 20 transfers the corresponding one or more scene states 44 to a remote module 60 running on a server computer 6 or computer network of the computer system which is remote from the edge device 2. In this regard, "remote" shall designate a position or arrangement which is not in the local real environment 22 and is not accessible by the edge device 2 through a local communication connection, such as Bluetooth ^{®}, but through a connection via a computer network, such as a corporate network and/or the Internet. The server computer 6 or computer network of the computer system may be part of the Internet, or of one or more cloud based systems as known in the art.

The remote module 60 is employed where high computational power components (e.g., LLMs) can be leveraged to process user queries (e.g., what recipe can I make?), in particular at the server computer 6 or computer network, e.g. cloud computer(s) accessible through the Internet 7.

In the present embodiment, a centralized scene management function is associated with the remote module 60. Generally, context data may be processed or derived from one or more scene states 44 maintained in a scene state memory 61, which preferably stores a plurality of scene states captured at respective points of time. For example, context may be derived from a type and/or position of objects detected in an image of the local real environment, or from audio data captured by an audio sensor, or any combination of sensor data.

The scene management function further includes an optional context database 62 which maintains historical and global context for scene states across sessions, i.e. scenes at multiple points of time with each point of time designating a respective session (e.g., it holds historical grocery lists of the user and/or user meal preferences). The session scene state memory 61 provides session-specific scene states 44 to support ongoing predictions and decisions, as set out in more detail below. According to an embodiment, the following remote components are used to predict potential future actions/events based on information from the stored scene states, available contextual information and the current scene state.

More specifically, an event prediction module 63 (designated in the following as event predictor 63) anticipates future events based on the context (e.g., context: "we are approaching the herbs aisle", prediction: "the user might forget the thyme when walking by it"). According to an embodiment, such a predictor will effectively rely on the concept of affordances (the concept of which has been described in detail above), or what can be done with each object on the scene, to constrain the universe of possibilities and greatly simplify the computation. For example, if the user is in a pantry with jars and flasks, the only likely actions are grabbing/opening jars.

According to an embodiment, a possible implementation can be based on Tim Engelbracht et al., "SpotLight: Robotic Scene Understanding through Interaction and Affordance Detection", https://arxiv.org/pdf/2409.11870, 18 Sept. 2024, or Tushar Nagarajan et al., "EGO-TOPO: Environment Affordances from Egocentric Video", https://openaccess.thecvf.com/content CVPR 2020/papers/Nagarajan_Ego-Topo_Environment Affordances From_Egocentric Video CVPR 2020_paper.pdf.

The generated predictions are passed to the conditional reaction engine 64, which dynamically generates reaction strategies, such as semantically complete reaction strategies, based on predicted events (for example, an LLM receives the potential action and a prompt for a reaction: "the user might forget the thyme when walking by it, what should we do to be helpful?", which will generate a reaction such as "remind the user not to forget the thyme if they miss it"). Finally, this information goes to a conditional reaction parsing module 65 (designated in the following as conditional reaction parser 65), which may be an additional LLM or a syntax checker that ensures proper execution on the edge device 2 and validates compatibility with the actuators 21, and which converts the semantic reaction strategies into actionable instructions for local systems, such as one or more local actuator devices, like displays 210 and/or loudspeaker 203 of the data glasses 200 (for example, "if thyme is detected outside the cart and then disappears without being detected inside the cart, remind the user verbally with 'don't forget the thyme'"). The edge device 2 may generally include any type and number of local actuator devices 31 (designated as local actuators), such as a display, loudspeaker, a vibrating actuator, etc., integrated with the edge device 2. In case of a vehicle as an edge device 2, for example, a local actuator device 31 may be a drive motor, a steering assist system, or any other actuator employed in the vehicle. In addition, or alternatively, one or more local actuator devices 32 may be provided which are external to the edge device 2 and coupled with the edge device 2, e.g., wirelessly, such as an external display, a washing machine or industrial machine. The local actuator devices 31, 32, 201, 203 are associated with the local real environment 22 since they are actuated based on scene states, event predictions and conditional reactions related to the local real environment.

The remote module 60 thus generates at least one conditional reaction for a least one local actuator device 31, 32, 201, 203 based on at least one event prediction processed from at least one scene state, and transfers the at least one conditional reaction to the local module 20, which maintains the at least one conditional reaction in a local trigger database 28 associated with the local module 20.

In the local module 20, a conditional reaction evaluator 29 takes a current scene state 44 (provided by the scene state extractor 25) and the at least one conditional reaction stored in the local trigger database 28 and matches and associates the scene state 44 with at least one of a plurality of conditional reactions maintained in the local trigger database 28 if a trigger condition is met, as explained in more detail below. The local module 20 then triggers generation of at least one driving signal for at least one of the local actuator devices (such as 31, 32, 201, 203) based on the associated at least one conditional reaction for driving a physical execution action on the at least one local actuator device according to the triggered conditional reaction 45 for which the triggers are fulfilled (e.g., if thyme becomes part of the detected objects in the scene state, but is never on a relation with the cart and then disappears, the voice component reminds the user through a loudspeaker 31 "don't forget the thyme"). These suggestions can be refined as new local context information becomes available (e.g., the user changes their mind and requests ingredients for "Spaghetti Bolognese", invalidating the "thyme" suggestion). Since given triggers are preset in the local trigger database, the entire computer system would be able to perform even under poor connection conditions between edge device 2 and server computer 6.

Advantageously, according to aspects of the invention, the combination of the features enables a mechanism that reduces the loop latency and the dependency the local computing system has on the remote computing system. In other words, by producing responses (triggered conditional reactions) to actions (according to captured scene states of the local real environment) at the remote module in advance that can be triggered locally by the local module, the latency incurred by having to send a scene state for evaluation in remote computing and getting a response back to the local system is largely circumvented. Additionally, the requirement for constant connection between the local and remote system is also greatly reduced.

In one embodiment, the reasoning elements in both the local module 20 and remote module 60 can be realized using LLMs. These comprise the event predictor 63, the conditional reaction engine 64 and the conditional reaction parser 65 in the remote module 60, and the conditional reaction evaluator 29 in the local module 20.

The present invention thus offers a technical advantage as it decouples reliance on continuous network connectivity, such as internet connectivity. Many environments have only unreliable connectivity to networks and remote systems. Here, the triggering event is detectable at the local level, making intermittent remote computing a possibility. The present invention thus provides a mechanism enabling a local-remote computer system to react to what is happening swiftly (reduced latency) by predicting potential possibilities and setting up triggers that are actionable by low-level sensors.

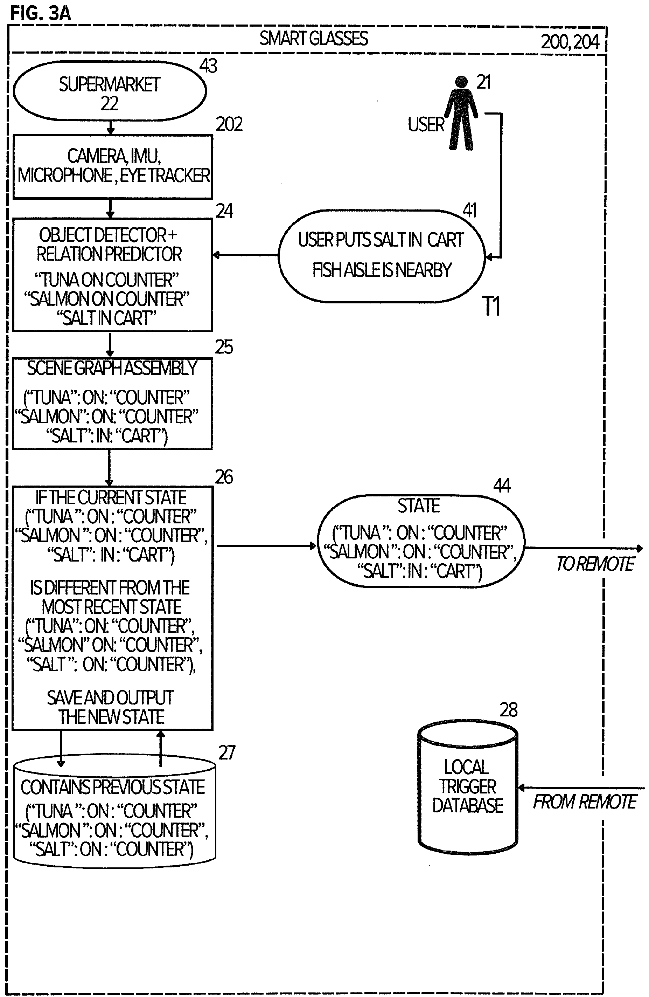

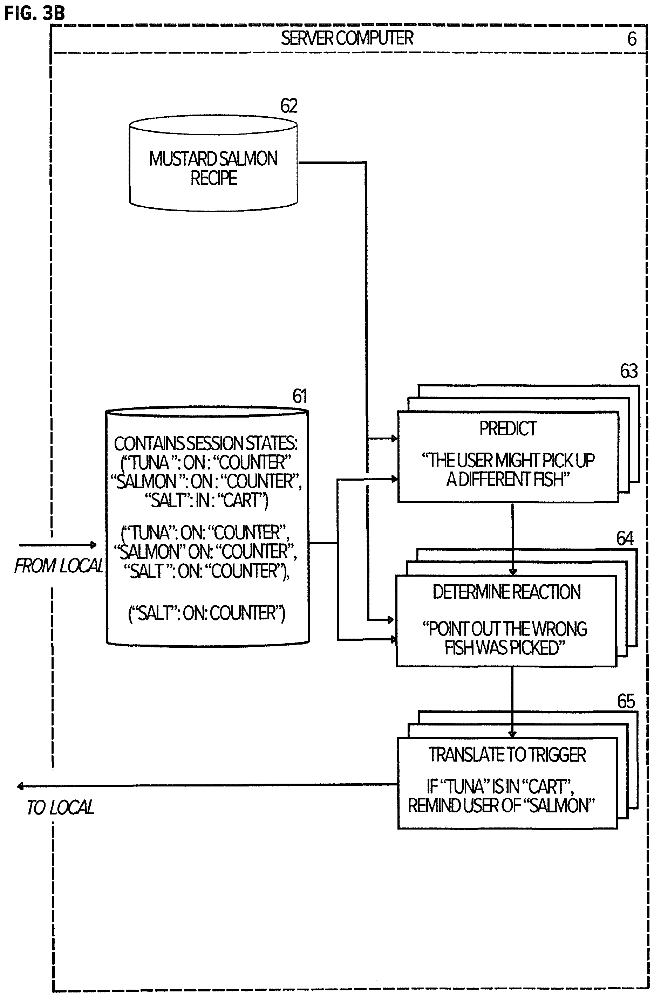

In the following, a particular embodiment is described with reference to Figures 3, 4 and 5:
In a potential use case, the process starts with a user 21 walking through a local environment 22 (cf. Fig. 1), which is a supermarket, in order to buy fish of different kind (such as salmon 221 and tuna 222 placed on a counter 220 in the supermarket 22) and other kinds of products needed to prepare a meal with such fish, such as salt 223 also placed on counter 220. The user 21 may have a recipe at hand, for example stored on his or her mobile phone. The user 21 wears smart glasses 200 and walks through the supermarket 22 while the displays 201 and speaker 203 in connection with data processing 204 provide information to the user according to AR techniques as commonly known in the art. For example, by means of camera 202 and/or other position sensors, the data processing unit 204 may track the user's position in the local real environment of the supermarket 22 and blend in relevant information in the right context on the displays 201 depending on where the user is looking at, or walking by, in relation to the environment.

At a first point of time T1, the user 21 puts salt 223 in the cart (not shown), wherein the fish aisle is nearby (action 41).

In the edge device 2 and local module 20, sensors like the camera 202 (or other sensors like IMU, microphone, eye tracker) capture raw data (e.g., images, video, or other sensory inputs) of the local real environment of the supermarket 22. The sensor data provided is fed into the data processing pipeline in the local module 20. First, model stack 24 processes the sensor data, or parts thereof, to extract relevant information. Here, an object detector and relation predictor of the model stack 24 may determine: "tuna is on counter", "salmon is on counter", "salt is in cart".

The outputs of this stack flow into the scene state extractor 25, which transforms processed data into a summarized scene state at the point of time T1. This entails, for example, a list of objects present in the scene plus their attributes and relations between the objects. Such a representation constitutes a scene graph or scene graph assembly, which summarizes most relevant aspects of the scene at the point of time T1 in a structured fashion. In the present example, the scene state 44_{T1} extracted by the scene state extractor 25 at time point T1 contains the following information: "tuna" : on : "counter", "salmon" : on : "counter, "salt" : in : "cart".

Thereafter, the scene state differentiator 26 compares current scene state 44_{T1} at time point T1 with a most recent scene state 44_{T1-t} at a previous time point T1-t stored in local scene state memory 27, which stores the following scene state 44_{T1-t} for time point T1-t: "tuna" : on : "counter", "salmon" : on : "counter, "salt" : on : "counter".

Since the scene state differentiator 26 has identified changes or updates in comparing the scene states 44_{T1} and 44_{T1-t}, the local module 20 transfers the scene state 44_{T1} at time point T1 to remote module 60.

In the remote module 60, context data is processed or derived from one or more scene states 44 maintained in scene state memory 61 including the current scene state 44_{T1}, received from local module 20, and scene states of previous sessions or points of time, such as scene state 44_{T1-t}. Scene state memory 61 preferably stores a plurality of scene states captured at respective points of time. For example, context may be derived from a type and/or position of the objects detected.

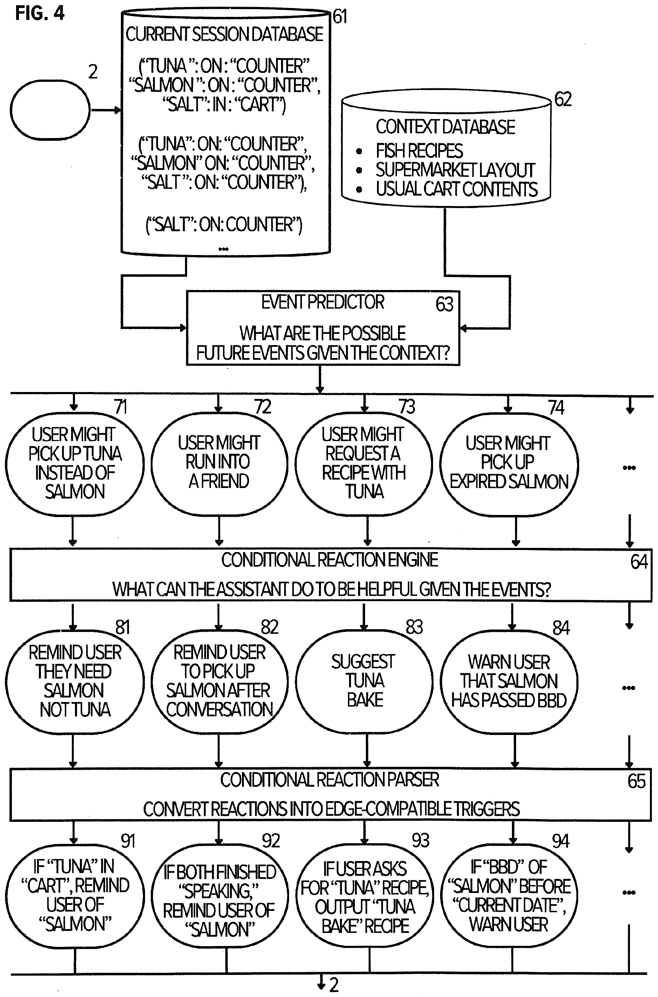

Referring to Fig. 4, context database 62 maintains historical and global context for scene states across sessions, and/or further context information, such as fish recipes, supermarket layout, usual cart contents.

Both, the session scene state memory 61 and the context database provide scene states 44 and further context to the event predictor 63. For example, the event predictor may determine from the received information: "What are possible future events given the context?". For example, the event predictor 63 anticipates four future events based on the context, as set out, for example, according to predictions 71 to 74 shown in Fig. 4.

The generated predictions 71 to 74 are passed to the conditional reaction engine 64, which generates potential reactions 81 to 84 for predictions 71 to 74, respectively, as shown in Fig. 4.

The potential reactions 81 to 84 go to the conditional reaction parser 65, which converts the reactions 81 to 84 into actionable or edge-compatible conditional reactions (instructions or triggers) 91 to 94, respectively, as shown in Fig. 4, which are indicative of the reactions 81 to 84 if a particular condition is fulfilled, for one or more local actuator devices 31, 32, like displays 201 and/or loudspeaker 203 of the data glasses 200. For example, respective conditional reactions, such as warnings or reminders as mentioned in triggers 91 to 94, may be generated which are configured to be converted into respective signals for the edge device 2 to control the displays 201 and/or loudspeaker 203 with respective driving signals for displaying respective warnings or reminders on the displays 201, or producing respective audible signal output by loudspeaker 203. In other embodiments, a respective driving signal may be generated through edge device 2 for driving a motor, steering assist system, or industrial machine according to the actionable instructions.

The remote module 60 transfers the conditional reactions 91 to 94 to the local module 20 which maintains these conditional reactions in local trigger database 28.

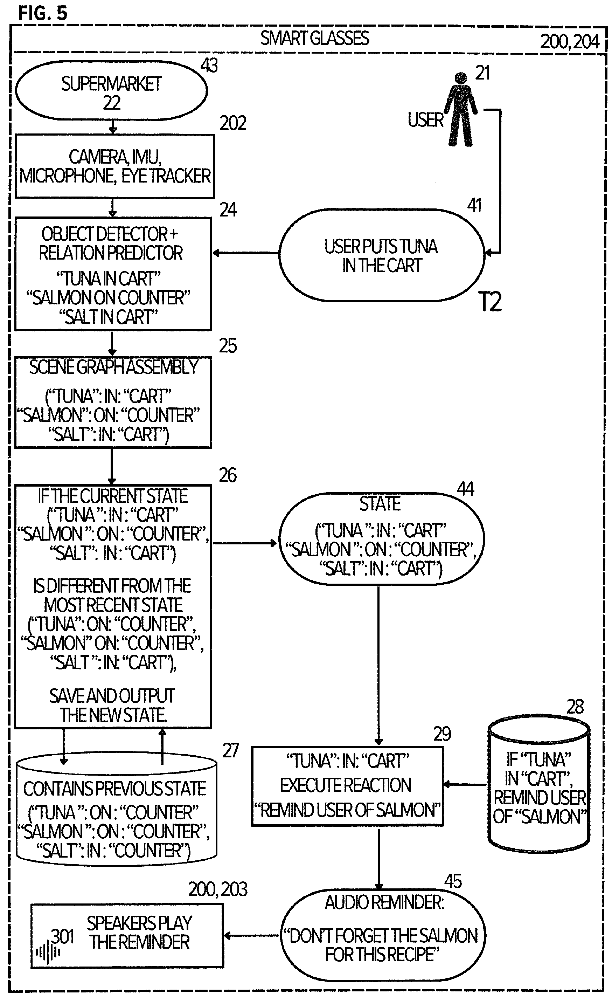

Turning now to Fig. 5, at a second point of time T2 subsequent to first point of time T1, i.e. later than the first point of time T1, the process proceeds as follows:
The user 21 puts tuna in the cart (action 41). Accordingly, the sensor data provided is fed into the model stack 24 to extract relevant information. Here, an object detector and relation predictor of the model stack 24 may determine: "tuna is in cart", "salmon is on counter", "salt is in cart".

The outputs of this stack flow into scene state extractor 25, which transforms processed data into a summarized scene state at the point of time T2. In the present example, the scene state 44_{T2} extracted by the scene state extractor 25 at time point T2 contains the following information: "tuna" : in : "cart", "salmon" : on : "counter, "salt" : in : "cart".

Thereafter, scene state differentiator 26 compares current scene state 44_{T2} at time point T2 with a most recent scene state 44_{T1} at a previous time point T1 stored in local scene state memory 27. Since the scene state differentiator 26 has identified changes or updates in comparing the scene states 44_{T2} and 44_{T1}, the local module 20 transfers the scene state 44_{T2} to the conditional reaction evaluator 29 for matching and associating the scene state 44_{T2} at time point T2 with at least one of a plurality of conditional reactions (e.g. triggers 91 to 94) maintained in the local trigger database 28, if a trigger condition is met. In the present embodiment, the conditional reaction evaluator 29 matches and associates the scene state 44_{T2} with trigger 91 shown in Fig. 4 since it matches the condition "tuna" : in : "cart" in scene state 44_{T2} with the corresponding condition in trigger 91 to execute the respective reaction.

The local module 20 then drives execution of a physical execution action (resulting from triggered conditional reaction 45 in the form of an audio reminder 301 "don't forget the salmon for this recipe") for which the trigger 91 is fulfilled and drives the local actuator 31 or 32 in the form of a speaker and/or display (such as speaker 203 and/or displays 201) accordingly. To this end, the edge device 2 may generate a corresponding driving signal (or control signal), such as an electrical signal to the respective local actuator, or may cause a respective external electrical circuit to generate such driving signal.

Since the given trigger 91 is already preset in the local trigger database 28 from the previous point of time T1, the entire computer system can perform even under poor connection conditions between edge device 2 and server computer 6 at time point T2.

Generally, reference sequences and common mistakes or actions may be stored in context database 62 in the remote component, such as the server computer 6 or computer network. On the edge device 2, a respective scene state 44 may be continuously extracted via sensor streams and a model stack. The respective local scene state 44 is sent to the remote component to generate conditional reactions (via the conditional reaction engine 64 in the remote component), which are then sent back to the edge device 2 and stored in the local trigger database 28. If a condition is evaluated as a match, the associated reaction is executed by actuators 31, 32 on the edge device 2 or coupled therewith.

Particular embodiments with respect to Augmented Reality have been described above for assisting a user in a potential use scenario where AR may be helpful in assisting the user for particular actions to take.

Further potential applications of the invention are as follows:
Industry:
   In an industry example, a frontline worker, e.g., gets informed about a mistake with low latency (e.g., camera detects missing flange cap), when the local scene state matched with a mistake in the local trigger database. It should be noted that the comparison between the local scene state and the triggers is performed locally on the edge device (e.g., a set/hierarchy of conditions or graph-pattern matching) and hence allows to trigger a (pre-defined) (re-)action by the edge device. This design enables low latency and independence from a fast connection to remote services.
Augmented Reality, e.g. applied in a Supermarket:
   Aspects of the invention may advantageously be applied in Augmented Reality applications. Accordingly, the local module may receive sensor data from at least one sensor which includes at least one camera and may trigger generation of at least one driving signal for at least one display as the at least one local actuator device for blending in information on the at least one display which is indicative of the associated at least one conditional reaction. For example, the information may be blended in in context with the real environment the camera is capturing according to an AR algorithm implemented in the local module. The camera and display may be integrated in one device, such as a smart glasses (as described above), e.g., the known RayBan-Meta ^{®} Smart Glasses. For example, a shopper has a grocery list. As he or she manoeuvres through the grocery store, the device (more particularly, the blended-in information on the display) prompts him or her with suggestions: "You've passed the fish counter - don't forget to buy the salmon!" As he or she moves through vegetable section, he/she hears, "try dill as they pair well together" whilst the dill is visually highlighted with AR. Then, in the dairy aisle, the device might say, "Stop, you need cream for your recipe!" This or a similar example case has been described in detail with respect to Figures 3 to 5.
Lab environment:
   For a specific example, a lab technician may be wearing smart glasses which continuously update as actions are being performed. This is uploaded to the remote component, where an LLM can determine which is the current step, and which steps are likely to follow. The context database should be able to provide additional information grounding to the predictions. Since the remote module is aware of potential next steps, it can send triggerable actions to the smart glasses, so that they warn the user on the display or speaker (for example, according to AR techniques as described above) as soon as they grab the wrong bottle for liquid extraction, avoiding delays caused by sending the current image to the remote system. This prevents the procedure from being spoiled by applying the wrong liquid before the response is received.
Automobiles:
   A vehicle, such as automobiles or cars, is a further application for the system and method described. Vehicles, such as cars come equipped with one or more internal cameras, outfacing cameras, microphones, LiDAR, and/or seat belt sensors, etc., and multiple actuators, such as an ECU (electronic control unit), driving system, braking system, steering assist system or other assist systems, to name a few. Therefore, they are also well suited for deployment of a local-remote system utilizing aspects of the present invention. For example, a particular user habitually drives to a coffee shop, gets a coffee to go, and then drives to work. The system described here generates a conditional trigger so that, if the user arrives at his/her destination and the coffee is still in the car when the user exits, the car will warn the user not to forget the coffee. Without the system described here, the user would likely already be walking away from the car when the reminder comes, but with the predictive latency reduction, the warning can be delivered in time.
Robotics:
   A robotic machine, in particular a mobile industrial robot on a factory floor, is an ideal application for the system and method described, since a robotic machine like the mobile industrial robot typically includes both a plurality (e.g., a large battery) of sensors and multiple actuators. Robots are effectively edge devices with limited compute power, and hence reliant on wireless connections for more advanced functions.

## Claims

1. A method of operating an interactive local-remote computer system, comprising:
receiving, by a local module (20) running on an edge device (2) of the computer system, first sensor data from at least one sensor (23, 202) which captures data of at least one of a local real environment (22) and the edge device (2) in relation to the local real environment (22), and transforming the first sensor data into at least one first scene state (44_{T1}) which is indicative of at least a part of the local real environment (22) or the edge device (2) in relation to the local real environment (22) at a first point of time (T1),
transferring, by the local module (20), the at least one first scene state (44_{T1}) to a remote module (60) running on a server computer (6) or computer network of the computer system which is remote from the edge device (2), and maintaining the at least one first scene state in a scene state memory (61) associated with the remote module,
generating, by the remote module (60), at least one conditional reaction for a least one local actuator device (31, 32, 201, 203) associated with the local real environment (22) based on at least one event prediction processed from the at least one first scene state (44_{T1}),
transferring, by the remote module (60), the at least one conditional reaction to the local module (20) and maintaining the at least one conditional reaction in a local trigger database (28) associated with the local module,
receiving, by the local module (20), at least one second scene state (44_{T2}) which is indicative of at least a part of the local real environment (22) or the edge device (2) in relation to the local real environment (22) at a second point of time (T2),
matching and associating, by the local module (20), the second scene state (44_{T2}) with at least one of a plurality of conditional reactions maintained in the local trigger database (28), and
triggering, if a trigger condition is met, by the local module (20), generation of at least one driving signal for the at least one local actuator device (31, 32, 201, 203) based on the associated at least one conditional reaction for driving a physical execution action (301) on the at least one local actuator device.

2. The method according to claim 1, wherein the remote module (60) is running at least one process which implements at least one machine learning model, particularly at least one large language model, LLM.

3. The method according to claim 1 or 2, further comprising
processing, in an event prediction module (63) of the remote module, context data from one or more scene states maintained in the scene state memory (61) including the at least one first scene state (44_{T1}) and performing an event prediction process from the context data for generating the at least one event prediction, and
processing, in a conditional reaction engine (64) of the remote module, the at least one event prediction and generating the at least one conditional reaction based on the at least one event prediction.

4. The method according to claim 3, wherein at least one of the event prediction module (63) and conditional reaction engine (64) implements at least one machine learning model for affordance prediction, particularly at least one of an object affordance prediction model and scene affordance prediction model.

5. The method according to one of claims 1 to 4, wherein the local module (20) is running at least one process which implements at least one machine learning model for matching and associating the second scene state (44_{T2}) with at least one of the plurality of conditional reactions maintained in the local trigger database (28).

6. The method according to one of claims 1 to 5, wherein the local module (20) employs a model stack (24) for processing and transforming the first sensor data into the at least one first scene state (44_{T1}), wherein the model stack includes at least one machine learning model trained for a respective task, particularly for at least one of object detection, object tracking, object property or affordance prediction, scene affordance prediction or activity recognition.

7. The method of one of claims 1 to 6, further comprising processing, in an event prediction module (63) of the remote module, context data from a context database (62) associated with the remote module (60), the context database maintaining historical and global data associated with respective scene states of a plurality of points of time.

8. The method according to one of claims 1 to 7, wherein the remote module (60) includes a conditional reaction parsing module (65) which converts the generated at least one conditional reaction into an actionable instruction for the at least one local actuator device (31, 32, 201, 203), wherein the conditional reaction parsing module (65) is running at least one process which uses at least one machine learning model, particularly at least one LLM.

9. The method according to one of claims 1 to 8, wherein the local module (20) includes a scene state differentiating module (26) which compares the at least one first and second scene states (44_{T1}, 44_{T2}) maintained in a local scene state memory (27) associated with the local module (20), and identifies at least one change in scene states compared, wherein in case of an identified at least one change, the scene state differentiating module (26) initiates transfer of a respective one of the first and second scene states (44_{T1}, 44_{T2}) to the remote module (60).

10. The method according to one of claims 1 to 9, wherein the remote module (60) receives at least one user query (42) from the edge device (2) through at least one of the first and second scene state (44), wherein generating the at least one conditional reaction for the at least one local actuator device (31, 32, 201, 203) by the remote module (60) is further based on the at least one user query.

11. An edge device (2) configured to communicate with a remote server computer (6) or computer network, comprising at least one processor and memory (204) that stores executable instructions that, when executed by the at least one processor, run a local module (20) which is configured to:
receive first sensor data from at least one sensor (23, 202) capturing data of at least one of a local real environment (22) and the edge device (2) in relation to the local real environment (22), and to transform the first sensor data into at least one first scene state (44_{T1}) which is indicative of at least a part of the local real environment (22) or the edge device (2) in relation to the local real environment (22) at a first point of time (T1),
transmit to a server computer (6) or computer network remote from the edge device (2) the at least one first scene state (44_{T1}),
receive from the server computer (6) or computer network at least one conditional reaction in response to transmitting the at least one first scene state (44_{T1}), the at least one conditional reaction comprising an instruction for a least one local actuator device (31, 32, 201, 203) associated with the local real environment (22), and maintain the at least one conditional reaction in a local trigger database (28),
receive at least one second scene state (44_{T2}) which is indicative of at least a part of the local real environment (22) or the edge device (2) in relation to the local real environment (22) at a second point of time (T2),
match and associate the at least one second scene state (44_{T2}) with at least one of a plurality of conditional reactions maintained in the local trigger database (28) if a trigger condition is met, and
trigger generation of at least one driving signal based on the associated at least one conditional reaction to the at least one local actuator device (31, 32, 201, 203) for driving a physical execution action (301) on the at least one local actuator device.

12. The edge device according to claim 11, wherein the local module (20) is configured to receive sensor data from at least one of: a camera, a microphone, an inertial sensor, a position sensor, a tracking sensor, a rotation sensor, a velocity sensor, an acceleration sensor, a magnetic sensor, a temperature sensor, an environmental pressure sensor, a depth sensor, a light sensor, a touch sensor, a geolocation sensor, a time sensor, or any combination thereof.

13. The edge device according to claim 11 or 12, wherein the local module (20) is configured to output the at least one driving signal to the at least one local actuator device (31, 32, 201, 203) which is or comprises at least one of: a wearable device, a display device, a mobile communications device, a loudspeaker, a smart glasses, a machine for assisting human activity, an industrial machine, a robotic machine, a laboratory machine, a vehicle, or any combination thereof.

14. An interactive local-remote computer system, comprising:
an edge device (2) according to one of claims 11-13,
a server computer (6) or computer network remote from the edge device (2), the server computer or computer network comprising at least one processor configured to run a remote module (60) which is configured to receive, from the local module (20) of the edge device, the at least one first scene state (44_{T1}) and to maintain the at least one first scene state in a scene state memory (61) associated with the remote module,
the remote module (60) configured to generate the at least one conditional reaction for the at least one local actuator device (31, 32, 201, 203) based on at least one event prediction processed from the at least one first scene state (44_{T1}), and to transmit the at least one conditional reaction to the local module (20).

15. The computer system according to claim 14, wherein the edge device (2) and the server computer (6) or computer network are configured to communicate with each other through a communications network (7), particularly the Internet.
